# EUROPÄISCHE PATENTANMELDUNG

(11) **EP 0 727 246 A1**
(43) Veröffentlichungstag der Anmeldung: **21.08.1996**
(21) Anmeldenummer: 95115611.6
(22) Anmeldetag: 04.10.1995
(51) Int. Cl.: B01D 46/52, B60H 3/06, B01D 46/42

(54) **Filter für die Luft des Innenraums eines Fahrzeugs**

(30) Priorität: 18.02.1995 DE 19505583
(71) Anmelder: FILTERWERK MANN & HUMMEL GMBH, D-71631 Ludwigsburg (DE)
(72) Erfinder: Hamm, Hans-Peter, D-71642 Ludwigsburg (DE); Mössinger, Klaus, D-71482 Obersulm (DE)
(74) Vertreter: Voth, Gerhard, Dipl.-Ing.

(57) **Zusammenfassung**

Es wird ein Filter, insbesondere zur Filtrierung der Luft für den Innenraum eines Fahrzeugs vorgeschlagen. Das Filter besteht aus einem Filtergehäuse mit einem reinluftseitigen Grundkörper, einem Filtereinsatz sowie einer rohluftseitigen Abdeckung. Der Filtereinsatz ist zwischen Grundkörper und Abdeckung angeordnet. Erfindungsgemäß weist die Abdeckung 11 Spannelemente 15 bis 18 auf mit welchen der Filtereinsatz 22 fixiert wird.

## Beschreibung

Die Erfindung betrifft ein Filter, insbesondere zur Filtrierung der Luft für den Innenraum eines Fahrzeugs nach dem Oberbegriff des Hauptanspruchs.

Aus der DE-OS 42 15 265 ist ein Filtereinsatz für den genannten Anwendungszweck bekannt. Dieser besteht aus einer mehrfach gefalteten Bahn aus mindestens einer Lage Filterwerkstoff, wobei die Falten der Bahn jeweils im wesentlichen quer zu der Längsrichtung der Bahn durchlaufende Scheitelbereiche und Sohlenbereiche aufweisen und etwa gleiche Abmessungen haben. Der Filtereinsatz weist eine rahmenförmig angeformte Schicht auf. Diese Schicht besteht aus einer Mischung aus Papierbrei und härtbarem Klebstoff.

Zur Erzielung einer möglichst optimalen Filterwirkung und eines hohen Luftdurchsatzes ist es erforderlich, die Faltenabstände des Filterstoffs möglichst exakt einzuhalten. Bei dem bekannten Filter werden die Faltenabstände allein durch die rahmenförmige Form der Schicht definiert. Dies hat den Nachteil, daß insbesondere im Mittelbereich des Filters ein undefinierter Zustand bezüglich des Faltenabstandes herrscht und damit die Filterwirkung beeinträchtigt wird. Es sind auch Filter bekannt, bei denen sogenannte Abstandshalter in die Falten eingeprägt sind. Durch diese wird zumindest zwischen den einzelnen Falten ein definierter Abstand eingehalten. Diese Abstandshalter haben allerdings den Nachteil, daß auch dadurch ein bestimmter Teil der wirksamen Filterfläche verlorengeht.

Die Nachteile sind insbesondere dort anzutreffen, wo außergewöhnliche Dimensionen des Filtereinsatzes gefordert werden, so z.B. bei sehr breiten oder sehr langen Filterelementen.

Der Erfindung liegt die Aufgabe zugrunde, ein Filter zu schaffen, welches auch in Extremfällen eine optimale Filterwirkung erzielt und welches beim Ein- und Ausbau leicht handhabbar ist.

Diese Aufgabe wird ausgehend von dem Oberbegriff des Hauptanspruchs durch dessen kennzeichnenden Merkmale gelöst.

Der Vorteil des Filters ist darin zu sehen, daß aufgrund zusätzlicher Spannelemente eine vordefinierte Lage eingehalten wird. Diese Spannelemente sind zweckmäßigerweise am Filtergehäuse und an der Abdeckung angeordnet und greifen in den Filtereinsatz ein. In einer vorteilhaften Ausgestaltung der Erfindung sind diese Spannelemente schwertartige Halter, welche von Taschen des zickzackförmig gefalteten Filtereinsatzes aufgenommen werden.

Insbesondere bei einem Filtereinsatz, der eine gegenüber der Breite wesentlich größere Länge aufweist, ist es erforderlich, zur Vermeidung von Dichtheitsproblemen, den Filtereinsatz exakt zu positionieren. Es besteht außerdem bei sehr langen Filtereinsätzen die Gefahr, daß beim Einbau des Filtereinsatzes in das Filtergehäuse dessen Länge aufgrund der Elastizität des Rahmens nicht mit der Länge des Gehäuses übereinstimmt. Auch hier ist die Fixierung mittels der schwertartigen Halterungen zweckmäßig.

Eine weitere Ausgestaltung der Erfindung sieht vor, die Abdeckung mit einem Steckscharnier zu versehen. Damit läßt sich diese sehr rasch austauschen und in einfacher Weise montieren.

Gemäß einer bevorzugten Weiterbildung besteht der Filtereinsatz aus einem Schaumstoffelement. Zur Aufnahme dieses Schaumstoffelements an den schwertartigen Haltern ist dieses mit Taschen versehen. Das Schaumstoffelement eignet sich insbesondere zur Speicherung von Aktivkohle, selbstverständlich können auch andere filterwirksame Substanzen in dem Element eingelagert werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher erläutert. Es zeigt
Figur 1 eine Schnittdarstellung eines Filters im Längsschnitt,
Figur 2 eine Schnittdarstellung eines Filters im Querschnitt.

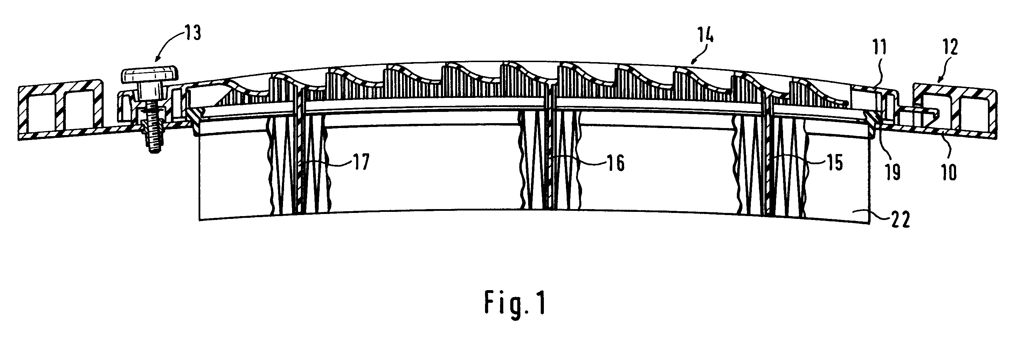

Das Filter gemäß Figur 1 besteht aus einem Grundkörper 10, auf dem eine Abdeckung 11 angeordnet ist. Die Abdeckung 11 weist am rechtseitigen Ende ein Steckscharnier 12 auf. Am linksseitigen Ende ist ein Schnellspannverschluß 13 vorgesehen. Die Abdeckung ist mit lamellenartigen Einlaßöffnungen 14 versehen. An der Abdeckung sind schwertartige Halter 15, 16, 17, 18 angeordnet. Diese greifen in ein zickzackförmig gefaltetes Filterelement 18 ein. Das Filterelement 18 ist mit einer umlaufenden Dichtlippe 19 versehen. Diese Dichtlippe liegt auf dem Grundkörper 10 auf und wird über die Abdeckung 11 gehalten. Bei der Montage des Filtereinsatzes 18 wird dieser zunächst auf die schwertartigen Halter 15 bis 18 aufgesteckt und anschließend die vormontierte Abdeckung über das Steckscharnier an dem Grundkörper 10 befestigt.

Die Position der schwertartigen Halter auf dem Filtereinsatz kann beispielsweise durch Kennzeichnungen auf dem Filtereinsatz kenntlich gemacht werden. Damit wird die korrekte Montage des Filtereinsatzes gewährleistet.

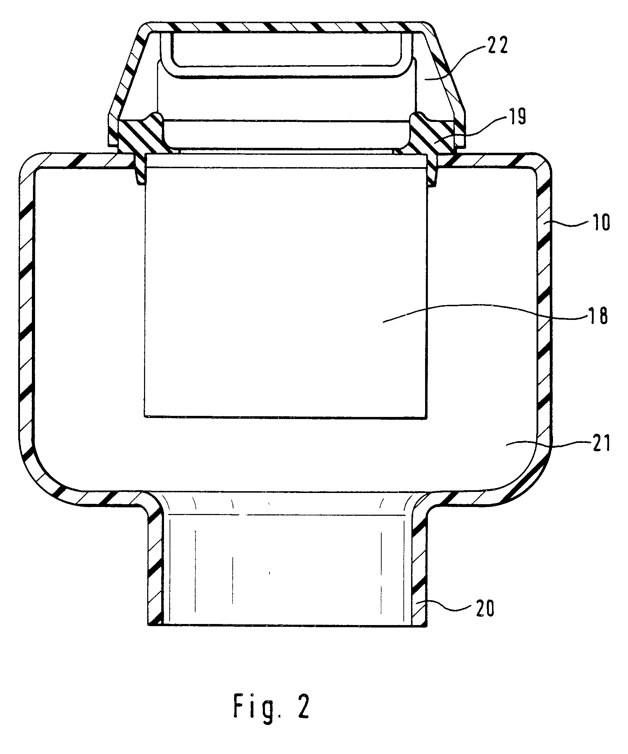

Figur 2 zeigt in einem Querschnitt den Grundkörper 10 mit dem Auslaß 20 für die gefilterte Luft. Innerhalb des Grundkörpers erstreckt sich der Filtereinsatz 18, der mit seiner Dichtlippe 19 den Reinluftraum 21 von dem Rohluftbereich 22 trennt.

## Patentansprüche

1. Filter, insbesondere zur Filtrierung der Luft für den Innenraum eines Fahrzeugs mit einem Filtergehäuse, bestehend aus einem reinluftseitigen Grundkörper, einem Filtereinsatz, welcher insbesondere aus einem zickzackförmig gefalteten Filterpapier hergestellt ist, sowie einer rohluftseitigen Abdeckung, wobei der Filtereinsatz zwischen dem reinluftseitigen Grundkörper und der rohluftseitigen Abdeckung angeordnet ist, dadurch gekennzeichnet, daß die Abdeckung (11) Spannelemente (15 - 18) aufweist, mit welchen der Filtereinsatz (22) in einer definierten Lage fixiert ist.

2. Filter nach Anspruch 1, dadurch gekennzeichnet, daß die Spannelemente aus wenigsten zwei schwertartigen Haltern (15 - 18) gebildet sind, welche in die Taschen des zickzackförmig gefalteteten Filtereinsatzes (22) eingreifen.

3. Filter nach einem der vorhergehenden Ansprüche, dadurch gekennzeichnet, daß die rohluftseitige Abdeckung (11) auf einer Seite mit einem Steckscharnier (12) und auf der anderen Seite mit einem Schnellverschluß (13) versehen ist.

4. Filter nach Anspruch 1, dadurch gekennzeichnet, daß der Filtereinsatz ein Schaumstoffelement ist, welches mit Taschen versehen ist und die Spannelemente wenigstens zwei schwertartige Halter sind, welche in die Taschen eingreifen.

5. Filter nach Anspruch 4, dadurch gekennzeichnet, daß das Schaumstoffelement Aktivkohle aufweist.
